# EUROPEAN PATENT SPECIFICATION

(11) **EP 2 893 186 B1**
(45) Date of publication and mention of the grant of the patent: **06.10.2021**
(21) Application number: 13771561.1
(22) Date of filing: 30.08.2013
(51) Int. Cl.: F03D 3/00, F03D 3/06

(54) **VERTICAL AXIS WIND TURBINE**
WINDTURBINE MIT VERTIKALER ACHSE
TURBINE ÉOLIENNE À AXE VERTICAL

(30) Priority: 03.09.2012 AU 2012903810
(43) Date of publication of application: 15.07.2015
(73) Proprietor: Advance Windpower Ltd., Glasgow, Strathclyde G72 8YA (GB)
(72) Inventor: BERTONY, Joseph, Hornsby North, New South Wales 2077 (AU)
(74) Representative: Murgitroyd & Company
(86) International application number: PCT/GB2013/052288
(87) International publication number: WO 2014/033473

(56) References cited:
- DE-A1- 4 305 600
- FR-A1- 2 768 187
- GB-A- 2 477 509
- US-A- 4 718 821
- US-A1- 2008 187 432
- US-A1- 2011 194 938
- US-A1- 2012 128 500
- US-A1- 2012 201 687

## Description

### BACKGROUND

The present disclosure relates to renewable energy apparatuses and more particularly relates to wind turbines for electricity generation.

Worldwide there is a trend towards use and development of renewable energy sources. The global trend is to break the cycle of dependency on oil based energy in favour of non-polluting renewable energy sources which are relatively economic, efficient, and naturally occurring.

One viable alternative energy source is wind. Wind is present as a source of renewable energy in most geographical locations of the world. In recent times, environmental concerns have driven investment into technological advancements in wind turbine technology especially in relation to large commercial wind turbines. Commercial wind turbines are usually sited together on so called "wind farms" throughout the world. These wind farms produce electricity which is normally intended to be introduced to the national electricity grid for commercial purposes.

Typically, these wind farms include high profile structures that comprise large towers that extend upwardly from the ground. At the top of each such tower, there is mounted a horizontal axis turbine. Such a horizontal axis turbine comprises a horizontally disposed shaft which is turned by a multiple blade rotor hub according to prevailing wind conditions and in parallel to received wind direction. Typical commercial designs have two or three blade rotors and the pitch of the blades may be variable. The rotor shaft turns relatively slowly in comparison with the required speed for efficient electricity generation. Therefore, the rotor shaft is generally coupled to a transmission system including gearing to step up the output rotational speed. The presence of a gearbox has been exposed as a weakness of large horizontal axis wind turbines in that service life is limited by the reliability of the gearbox. Furthermore, the horizontal axis turbine may have a limited operational wind speed range, requiring it to be braked or locked against rotation when wind speed limits are likely to be exceeded in order to avoid damage to the gearbox. Furthermore, scaling up horizontal axis wind turbines may lead to mass management issues.

Global demand for electricity is increasing not only in the developed countries, but also to address the anticipated energy needs of many millions of people in the developing third world. The current trend has been to focus on generation of electricity at a relatively small number of sites with transmission and distribution of electricity to consumers by an existing national grid or network of power lines. However, the load on such an energy infrastructure could be reduced if individual consumers or a small group of consumers had the means to be self-sufficient with respect to their power needs. At present achieving self-sufficiency is expensive and relies on consumers to adopt solar power or traditional petroleum based fuel driven generators. In time, self-sufficiency will be embraced by consumers but only when it is economic to do so or some other imperative dictates the need for self-sufficiency such as absence of supply when recoverable hydrocarbon resources are exhausted for example. The burning of fossil fuels is no longer a viable or desirable long term option. However the costs involved in the change of infrastructure required to deliver and to transport power is beyond many countries financial capabilities over the short and medium term. Therefore, there continues to be a foreseeable need of an alternative means for generating power.

US2008187432A1 discloses a vertical axis wind turbine having a plurality of blades spaced from a rotatable around a rotor shaft vertical to the ground. The plurality of blades are arranged in a helical pattern about the rotor shaft. Each blade is flexible to move in response to wind and has a top, bottom, leading edge, and trailing edge wherein the leading edge is in the shape of an airfoil. A hub having a plurality of blade attachment rods radially extending from the rotor wherein in one blade is secured to one of the attachment arms. The hub has a plurality of attachment rods radially extending from the rotor wherein one blade is secured to one of the attachment rods near the center and wherein the top of each blade is closer to the rotor than the bottom of each blade.

US4718821A discloses a self-starting windmill of the vertical axis type. Upstanding helical in configuration, pivotally mounted outer blade members surround a central, rotatably mounted shaft are connected to the shaft by radially disposed strut members. Arcuate in planform, pivotally mounted inner blade members are mounted radially inwardly of the outer blade members in a collective triangular configuration and have their respective convex surfaces facing toward the shaft. A weight member and a spring member bias a preselected edge of each outer blade member against wind force.

FR2768187A1 discloses a wind power plant comprising a support capable of rotating about a vertical axis, at least two blades borne by the support and having each a streamlined section, resting on a curvilinear axis defined by the intersection of a hemisphere and a half-cylinder, each blade having a top end and a lower end respectively connected to the support by first linking means with articulation and by second linking means with articulation, providing an angular lead to the blade depending on the rotation speed of the wind power plant about its axis.

An object of the present disclosure is to provide an improved design of wind-driven machine capable of being utilised in the generation of electricity. The wind-driven machine to be disclosed herein may be used to transform rotational motion into other useful work by suitable coupling to a power take off shaft, optionally through a power transmission system. Thus the wind-driven machine disclosed herein may be used to drive a fluid pump, or an electrical generator for example.

### Summary

According to a first aspect of the invention there is provided an apparatus in accordance with claim 1.

In embodiments the vertically mounted shaft may be connected to an epicyclic gear transmission allowing transfer of torque from the vertically mounted shaft to a device or a machine, such as for example, a fluid pump or an electrical generator. The epicyclic gear transmission may comprise an outer static ring gear within which a plurality of epicyclic (satellite) gears are arranged to drive a central (sun) gear. This arrangement is virtually silent, offering a significant environmental advantage over traditional horizontal axis wind turbines. Additionally, the use of an epicyclic gear transmission together with a torque sensor allows the use of the driving torque to be monitored and used to enable control of all operational parameters of the disclosed vertical axis wind turbine. It is possible to extend the active wind capture of the disclosed apparatus over a substantially wider range, say from wind speeds of only 2 m/s up to about 40 m/s instead of current ranges of from 6 m/s to 24 m/s.

Embodiments of a turbine blade to be used in assembly of a vertical axis wind turbine have a unique warped aerofoil shape. The turbine blade may be an elongate blade having a longitudinal axis, and in the intended use would be vertically oriented with its longitudinal axis aligned with a primary vertical axis of a rotatable vertically shaft. The turbine blades each may be generally arcuate shaped in cross section, to provide an aerofoil section.

A turbine blade in accordance with this disclosure may be formed by orienting one end relative to the other end in an offset relationship, for example a rotation of one end relative to the other end, such that the rotated end can be disposed in a new position relative to the other end within the range 30 - 180 degrees out of phase as viewed relative to a longitudinal axis through the turbine blade.

According to a second aspect of the invention there is provided an electrical power system comprising an apparatus according to the first aspect of the invention, operatively connected with an electricity generator which is electrically connected with at least one of an inverter, electrical switchgear, electrical charge storage devices and a power grid.

The present invention provides an alternative to the known prior art and the identified shortcomings thereof. The advantages of the disclosed turbine blade and wind-powered apparatus incorporating same will appear from the illustrative description to follow. In the following specific description reference is made to the accompanying representations, which form a part of the disclosure. These representations show by way of illustration specific embodiments in which the invention may be practiced.

### BRIEF DESCRIPTION OF THE DRAWINGS

The present invention will now be described according to preferred but non limiting embodiments and with reference to the accompanying illustrations, wherein;
Figure 1 is a perspective view of a vertical axis wind turbine apparatus according to one embodiment of the present invention;
Figure 2 is a plan view of the vertical axis wind turbine apparatus of figure 1;
Figure 3 is a side elevation view of the vertical axis wind turbine apparatus of figure 1;
Figure 4 is a fragmentary vertical sectional view of a vertical axis wind turbine apparatus showing the rotatable vertical shaft of the vertical axis wind turbine apparatus;
Figure 5 is a perspective view of a turbine blade for a vertical axis wind turbine apparatus;
Figure 6 is an elevation view of a turbine blade showing a reinforcing structure utilized within the turbine blade;
Figure 7 is an end elevation view of a turbine blade for a vertical axis wind turbine apparatus;
Figure 8 shows a view from above a vertical axis wind turbine apparatus wherein the turbine blades are moveable using linear actuators provided on control arms;
Figure 9 shows an enlarged schematic view of a wind turbine showing turbine blades at different positions with reference to corresponding radial support arms and relative to airflow during a 360 degree rotation about a vertical drive axis;
Figure 10 shows an enlarged cross sectional view of a typical turbine blade according to one embodiment;
Figure 11 shows schematically a toroidal wind generator located on a roof top indicating its relative size in comparison to a person;
Figure 11a shows a plan view of the toroidal wind generator of figure 11;
Figure 12 shows a horizontal wind generator superimposed over a vertical axis wind turbine apparatus to show the relative sizes of the wind tunnels which operate the horizontal and vertical wind generators respectively;
Figure 13 shows a toroidal vertical axis wind turbine apparatus located in a maritime environment;
Figure 13a shows a plan view of figure 13;
Figure 14 shows a schematic view of a wind force regime about a toroidal wind turbine apparatus as contemplated in this disclosure;
Figure 15 shows a turbine blade in finite element and demonstrating a helical warp;
Figures 16 and 17 respectively show first and second tables of results of operation of an embodiment of a toroidal wind turbine as contemplated in this disclosure;
Fig. 18 shows schematically and in successive illustrations, the differential pressure effect in airflow created by wind passing over a single turbine blade having a lengthwise warp as it advances around a toroidal path; and
Fig. 19 represents an optional hydraulic power transmission system for transmitting torque generated by the toroidal vertical axis wind turbine to multiple outputs; and
Figs. 20a and 20b respectively illustrate in section and plan, an epicyclic gear transmission which may be coupled between a vertical axis turbine shaft and an output shaft.

Other aspects and advantages of the present invention will become apparent from consideration of the following description and the accompanying drawings which are merely illustrative and non-limiting upon the disclosure, the full scope of which is determined by the claims appended hereto.

### DETAILED DESCRIPTION OF EMBODIMENTS

In the drawings, a vertical axis wind turbine apparatus is shown therein and indicated generally by the numeral **10**. The vertical axis wind turbine apparatus 10 is designed to be placed in the path of wind such that as the wind passes over and through the vertical axis wind turbine apparatus the wind will impinge upon a series of movable turbine blades attached to a vertically disposed rotatable shaft that will in turn drive, optionally through a power transmission system, a machine such as a generator operatively associated with the vertical axis wind turbine apparatus.

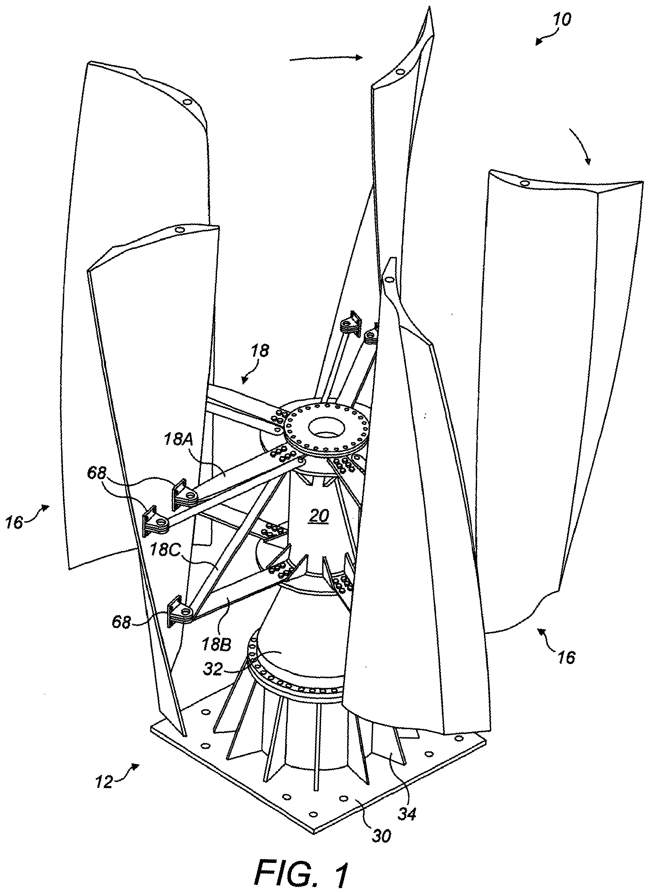

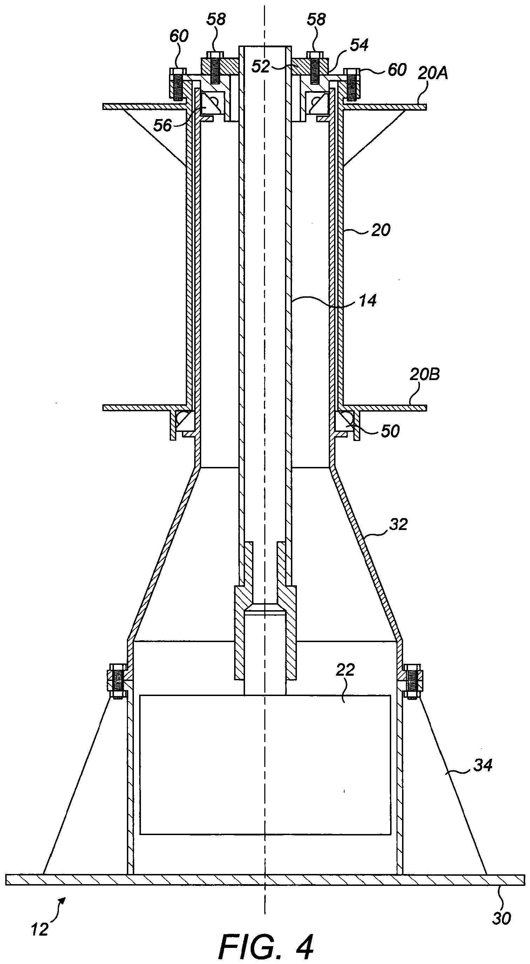

As shown in Fig. 1, vertical axis wind turbine apparatus 10 includes a main frame structure **12** and a rotatable drive shaft **14** mounted in the main frame structure 12. The rotatable drive shaft 14 is operatively connected with a generator **22** (see Fig. 4). Disposed about main frame 12 of turbine 10 is a series of turbine blades, **16**. Rotatively mounted or journaled about the upper portion of the main frame structure 12 is a rotary sleeve **20**. Rotary sleeve 20 is operatively connected to the rotatable drive shaft 14 such that as the rotary sleeve 20 is rotated, the rotary drive shaft 14 also rotates. Extending from the rotary sleeve 20 is a series of connecting arms **18** that respectively connect the rotary sleeve 20 to the plurality of turbine blades 16. The connecting arms include upper arms **18A**, and lower arms **18B** with optional, angled brace **18C**. Optional brace 18C is shown extending diagonally from an inner end of upper arm 18A, downwardly to the outer end of lower arm 18B. The particular manner of connecting the rotary sleeve 20 with the respective turbine blades 16 will be discussed in greater detail below.

Main frame structure 12 includes a base plate **30**. The base plate 30 covers a sufficient area that it is able to support the vertical axis wind turbine apparatus 10 in a stable configuration to withstand anticipated wind force. In some embodiments, or for some applications, the base plate 30 may be anchored by bolts or other suitable fastening means to an underlying support structure. Main frame structure 12 includes a multi-sectional housing **32** that extends upwardly from the base plate 30. A series of strengthening and stabilising buttress-like fins **34** are circumferentially disposed around the lower portion of the main frame 12.

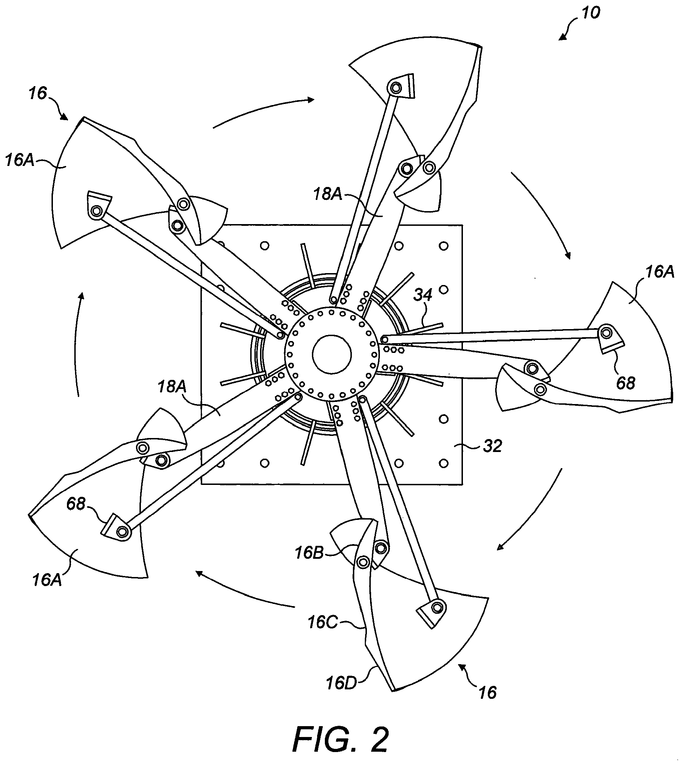

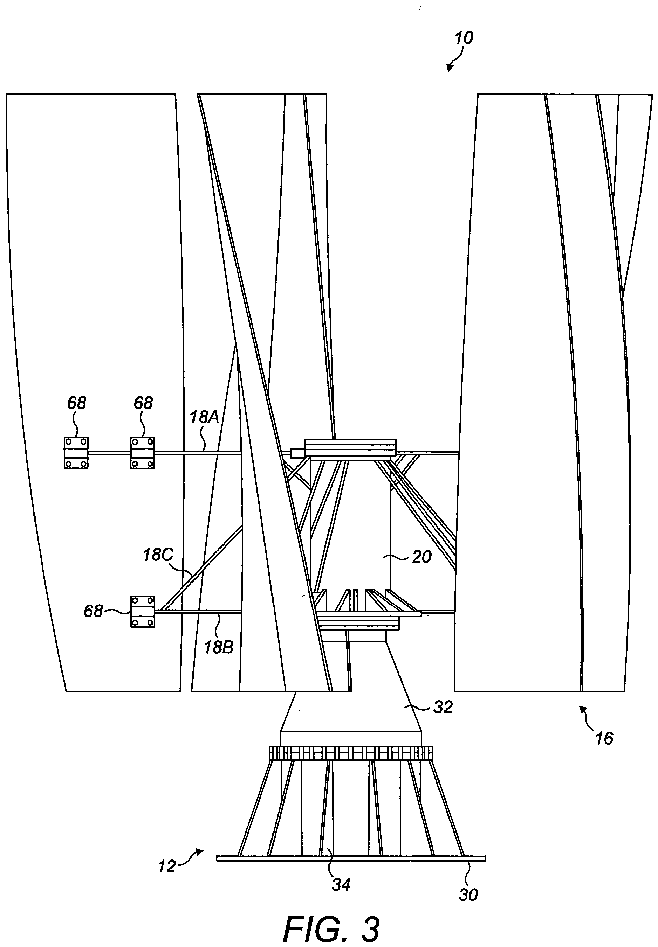

Fig. 2 is a plan view of the vertical axis wind turbine apparatus of Fig. 1, and Fig. 3 is a side elevation view of the vertical axis wind turbine apparatus of Fig. 1. Notably each of these figures illustrates the spacing of the turbine blades 16 from the rotary sleeve 20 and rotatable drive shaft 14. The spaced relationship is such that the turbine blades 16 are free to interact with wind received upon all surfaces of the turbine blades 16, which turbine blades 16 follow a toroidal path (shown by arrows in Fig. 2) driving around the rotary sleeve 20 and rotatable drive shaft 14. This provides a unique toroidal vertical axis wind turbine apparatus not disclosed in the known art.

Turning to a more detailed discussion of the rotary sleeve or housing 20, as represented in Fig. 4 the rotary sleeve 20 is rotatably mounted around the upper section or upper portion of the housing 32. The rotary sleeve 20 includes an upper annular flange **20A** and a lower annular flange **20B**. Bearings **50** lie under the lower flange 20B and provide a bearing support for the rotary sleeve 20. That is, as the rotary sleeve 20 rotates about the housing 32, bearings 50 support and facilitate this rotation.

Turning to Fig. 4, a plate **52** is shown secured to the upper portion of the shaft 14. Plate 52 is in turn secured to an annular bracket **54**. As shown in Fig. 4, a series of bolts **58** extend downwardly through plate 52 into the annular bracket 54 and effectively couple the plate with the annular bracket. A second bearing assembly **56** is disposed adjacent the annular bracket 54, for example as illustrated in Fig. 4 where the second bearing assembly 56 is supported about an upper portion of a housing 32 in a position generally underneath the annular bracket 54. Thus as the shaft 14 is rotated, the annular bracket 14 is supported by the bearing assembly 56. The annular bracket 54 is in turn secured directly or indirectly to the rotary sleeve or housing 20. This may be accomplished by a series of bolts **60**. Thus it will be appreciated that by rotatively driving the annular sleeve 20, that rotating motion is imparted to the annular bracket 54 which in turn drives the plate 52 which in turn drives the drive shaft 14.

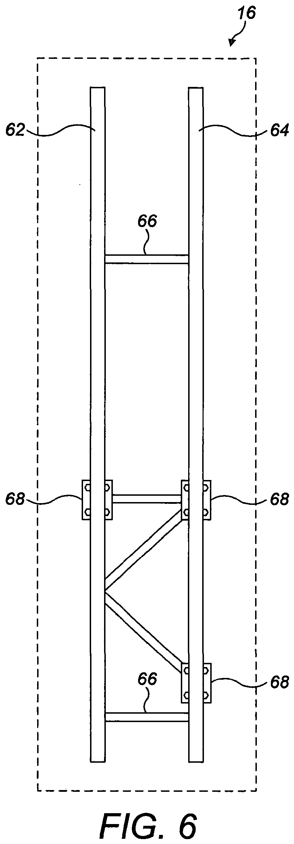

The turbine blades 16 are connected to the rotary sleeve 20 by a series of connecting arms **18A, 18B,** and optional angled brace **18C**. Fig. 1 illustrates that each turbine blade may include two connectors 56. For each turbine blade there may be provided an upper connecting arm 18A that extends from the upper flange 20A of the rotary sleeve 20 to an upper connector **68** affixed to the turbine blade 16. Likewise there may be a lower arm 18B that extends from the lower flange 20B to a lower connector 68 secured to the same turbine blade 16. In addition there may be a diagonal brace 18C, shown in Fig. 1, which may extend diagonally from the upper flange 20A of the rotary sleeve 20 to the lower connector 68. In the embodiment illustrated herein, each turbine blade 16 is provided with two connectors 68. It will be appreciated that more than two connectors can be utilized. In one embodiment, there may be provided three connectors 68 as shown in Fig. 6. In this case, there may be provided two upper connectors 68 and a lower connector 68. The turbine blades 16 may extend above the top of the shaft 14. In one design or embodiment, approximately two-thirds of the length or height of each turbine blade extends above the top of the shaft 14.

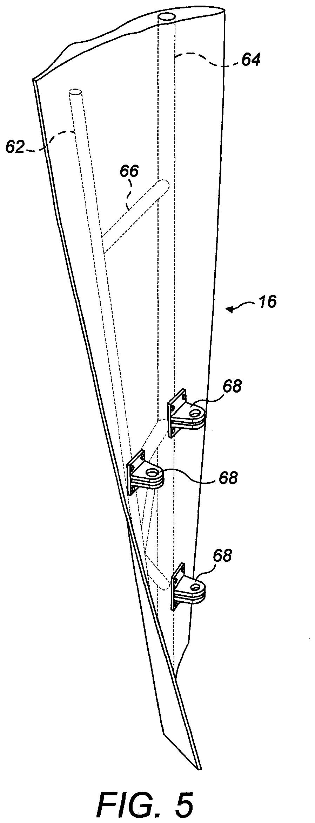

Referring to Figs. 5, 6 and 7, there is shown therein details of the unique turbine blade 16 that forms a part of the vertical axis wind turbine apparatus 10. Each turbine blade 16 can be constructed of various materials but in the embodiment illustrated herein, each turbine blade is constructed of reinforced fiberglass. Embedded within the turbine blade 16 there is shown a reinforcing frame structure which may be of metal. In this case, as shown in Figs. 5 to 7, the reinforced structure comprises a pair of metal rods **62** and **64** that are interconnected at various points by cross members **66**. The connectors 68 discussed above are anchored to each turbine blade 16 at points that permit the connectors to be secured directly or indirectly to a portion of the reinforcing frame structure of the turbine blade 16.

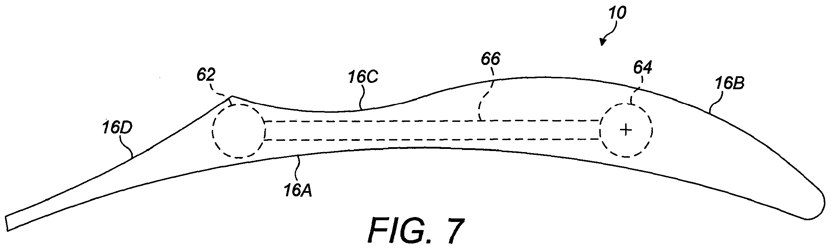

Fig. 7 illustrates the unique configuration of an embodiment of the turbine blade 16. First the turbine blade 16 includes a major concave surface **16A** formed on one side of the turbine blade. This is illustrated in Fig. 7. On the opposite side of the turbine blade there is provided compound convex-concave surfaces. These surfaces include an outer convex surface **16B**, an intermediate concave segment **16C**, and an outer lesser concave segment **16D**. Fig. 7 illustrates the general cross-sectional area or profile of an embodiment of the turbine blade 16.

As can be seen by referring back to Fig. 1, each turbine blade 16 has the profile of a warped aerofoil. Specifically, according to the invention, each vertically oriented elongate turbine blade 16 has a length and a width, and a length-wise warp which extends along at least a substantial part of the length of the turbine blade. The warp may be a helical warp extending throughout the length of the turbine blade.

When mounted on the vertical axis wind turbine apparatus 10, the opposite ends of the turbine blade 16 are mutually offset and appear warped relative to each other. In one application the opposite ends are offset approximately 50 to approximately 90 degrees with respect to each other. This is particularly illustrated in Fig. 2. In the particular embodiment illustrated in Fig. 2, the lower edge of the turbine blade 16 slightly trails the upper edge. The unique cross-sectional shape of the turbine blade 16 as shown in Fig. 7 coupled with the warp configuration just described provides a high efficiency wind turbine blade. The vertical warp, in one case or embodiment, is about 60°. This warp promotes secondary wind flow turbulence accelerating the wind flow within the toroidal volume enable by the presently disclosed vertical axis wind turbine apparatus.

The design of the turbine blade 16 enables the vertical axis wind turbine apparatus 10 under generator load to take advantage of a velocity pressure differential acting as "lift" and "drag". As the wind impinges on turbine blades 16, the shape and configuration of the turbine blades is such as to function at times in a similar fashion to an airplane wing or aerofoil in that it is possible to generate "lift". Lift imparts a force and this force enables the turbine blades 16 to be driven around the vertical axis of the drive shaft 14. Further, the general shape of the turbine blades 16 and the warped configuration enables the turbine blades 16 to take advantage of what may be referred to as "drag". Here the wind, as schematically represented in Fig. 1, impinges on the trailing surfaces of the turbine blades 16 and this also causes the turbine blades 16 to be forced around the axis of the drive shaft 14. The vertical axis wind turbine apparatus in use assumes an expanded toroidal configuration to offer a vertical axis wind turbine apparatus wherein a multiple blade turbine rotates about an assumed theoretical vertical axis within and in response to the received wind flow. The turbine blades used in the presently disclosed vertical axis wind turbine apparatus may be alternatively and variously referred to by such terms as a wing blade, vane, impeller or aerofoil.

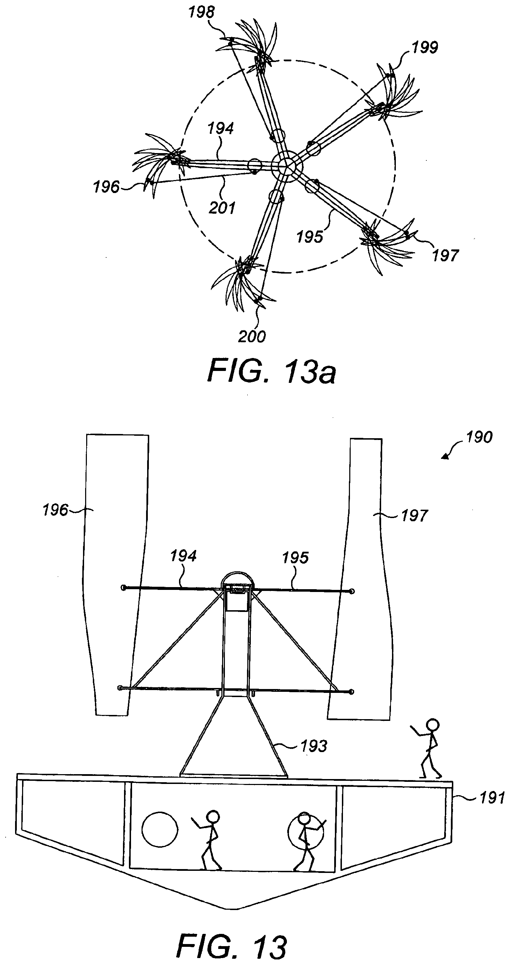

The vertical axis wind turbine apparatus does not need to be in an absolute vertical axis configuration to operate effectively. The vertical axis wind turbine apparatus can be set on an inclined slope to take full advantage of a particular topographic configuration. Equally, the vertical axis wind turbine apparatus may mounted on a floating offshore power generating platform (see Fig. 13), and yet be substantially unaffected in its operation by sea swell motions which have diminished effect due to the low centre of gravity of the vertical axis wind turbine apparatus.

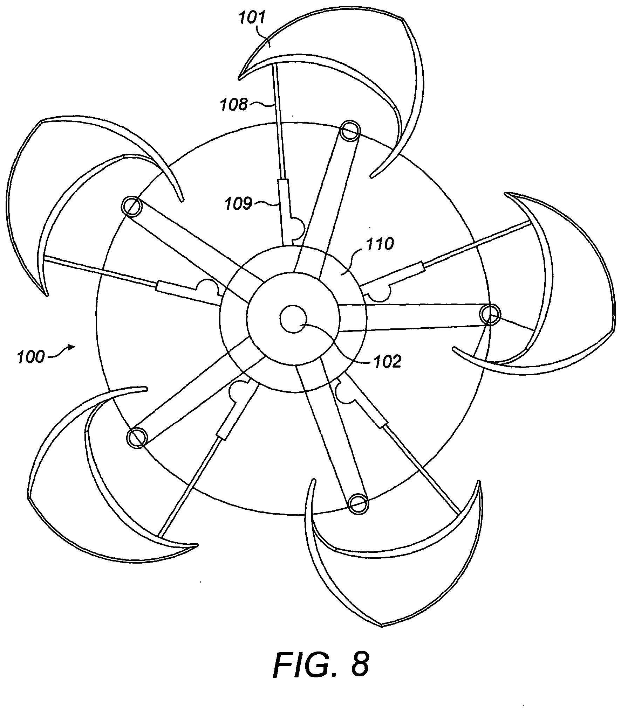

Fig. 8 shows a view from above a vertical axis wind turbine apparatus **100** according to a preferred embodiment wherein each turbine blade **101** is connected to a hub **110** or the like mounting near the vertical axis **102** by a control arm **108** which includes a linear actuator **109** for moving the turbine blade 101 inwardly towards the vertical axis 102.

Turbine blade 101 has a generally concave inner surface **105** which on the windward side captures wind by presenting a maximum surface area.

In an alternative embodiment the control arm has no linear actuator and instead the hub may be selectively advanced rotationally through an arc to provide for relative shortening of the spatial distance between the hub and the turbine blade so as to draw the turbine blade towards the hub by means of the control arm.

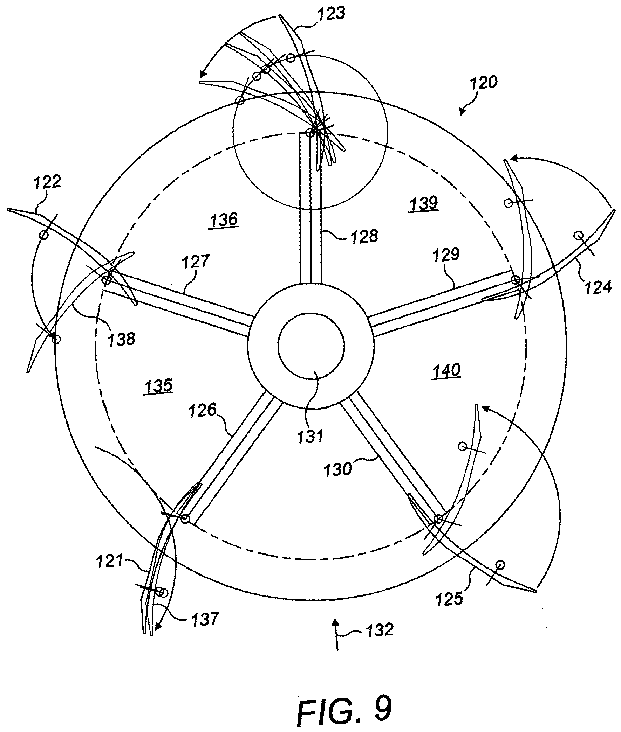

Fig. 9 shows a schematic plan view of a generator **120** showing turbine blades **121**, **122**, **123**, **124** and **125** subtended from respective radial arms **126**, **127**, **128**, **129** and **130** all rotating in unison about a drive shaft **131** but each turbine blade **121**, **122**, **123**, **124** and 125 respectively being at a different orientation relative to airflow (arrow 132) during a 360 degree cycle of rotation about vertical drive shaft **131**. In downwind quadrants **135** and **136** wind **132** is captured via respective turbine blade concave surfaces **137** and **138**. As turbine blade 123 passes into quadrant **139** it presents its smallest dimension to wind creating least drag but still generating a lift force which urges the turbine blade into the upwind side through quadrants 139 and **140**. The attitude of turbine blades 124 and 125 at upwind quadrant 139 and 140 locations creates one surface with a region of low pressure which urges the turbine blades upwind using similar principles to those observed in an aircraft wing or sailing boat sail.

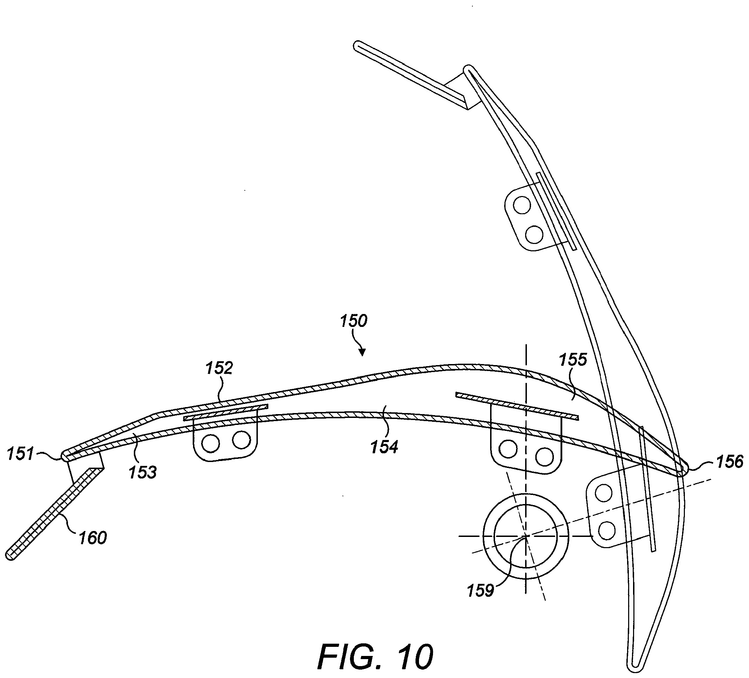

Fig. 10 shows an enlarged cross sectional view of a turbine blade **150** according to one embodiment. In that embodiment the profiled shape of each turbine blade when viewed in cross section or end view moving from a first edge **151** to a second edge **156** comprises a first outward tapered region **153** of a first size, a second tapered region **154** of a second size and a third inward taper **155** extending to said second edge 156. According to an embodiment, the second outward tapered region 154 may include a narrow section **152** over part of the length of the second taper.

Extending from the first edge **151** is a control surface **160** in the nature of a flap which aerodynamically assists the wind capture during rotation of the vertical axis wind turbine. According to one embodiment, each turbine blade is capable of rotation up to but can exceed 90 degrees about its secondary axis of rotation 159. Each turbine blade 150 may be retractably adjustable as the vertical axis wind turbine rotates for example using linear actuators incorporated in radial support arms which extend radially from the primary shaft of a vertical axis wind turbine.

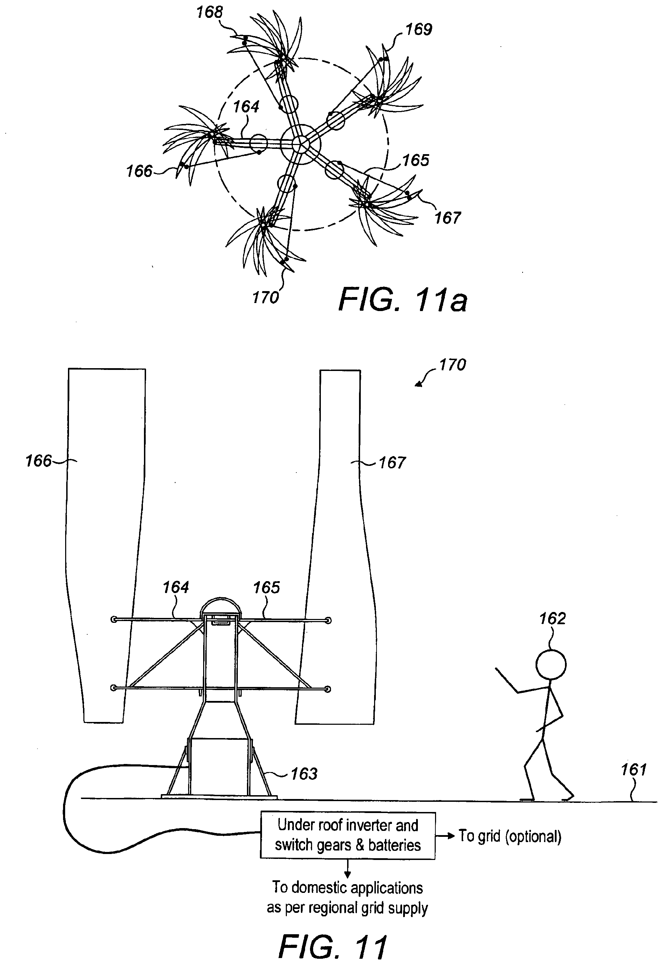

Fig. 11 illustrates schematically an assembled vertical axis wind turbine or toroidal wind generator **160** located on a roof top **161**, and indicating its relative size in comparison to a person **162**. Generator 160 includes a primary support 163 from which extend radial arms **164** and **165** retaining turbine blades 166 and 167. Plan view Fig. 11a shows turbine blades **166**, **168**, **169**, **167** and **170**. In this arrangement an under roof inverter and switch gears may be provided along with storage batteries. In this way the vertical axis wind turbine- or toroidal wind-powered electrical generator 160 may be connected via a single power cable to the inverter and switchgear and storage batteries to meet demand from domestic appliances or further connected to the external grid to deliver excess power generated to other users.

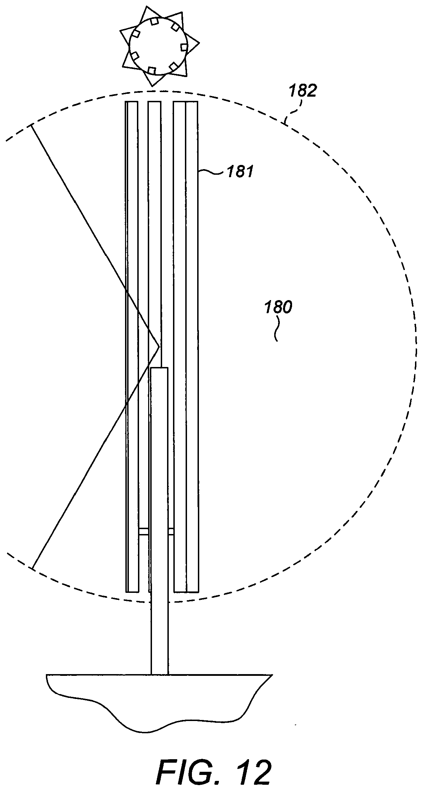

Fig. 12 shows a horizontal (propeller type) wind generator **180** superimposed over a vertical axis wind turbine generator **181** to show the relative sizes of the wind tunnels which operate the horizontal and vertical wind generators respectively. Circle **182** shows the large size of the wind tunnel which operates the horizontal wind turbine 180.

Fig. 13 shows a vertical axis wind turbine or toroidal wind generator assembly **190** located in a maritime environment. Generator 190 is represented as floating on a buoyant body **191** in water and includes a primary support **193** from which extends radial arms **194** and **195** retaining turbine blades **196** and **197**. Plan view Fig. 13a shows the turbine blades 196, 197, in spaced relationship with further turbine blades **198, 199,** and **200.** Referring to turbine blade 196 by way of example, this may be mechanically adjusted (re-oriented) by a controller which actuates a mechanical or hydraulic arm **201**.

The vertical axis wind turbine or toroidal wind turbine derives its rotary motion from a differential velocity pressure of the air flow acting on the turbine blades. The inner and outer surfaces of each turbine blade result in a constant cross section combined in a uniform longitudinal warp (warp). This arrangement promotes complex additional air flow turbulences within the toroidal displacement

The vertical axis wind turbine upper rotation velocity is limited to the prevailing wind peripheral velocity, at which there is only minimal torque generated and may be referred to as the "no load rpm". Any attached mechanism applying a restraint to the turbine rotation, and reducing the turbine velocity in relation to the wind velocity, increases the differential velocity pressure on the turbine blades. This holds until the differential velocity pressure matches the attached machinery pressure demand, in the form of torque "in", and torque "out" and this is referred to as the "load rpm". The resulting "Toroidal" vertical axis wind turbine is a low rpm turbine machine developing high torque with practically no noise and no vibrations, requiring practically no maintenance and of relatively low cost construction. Such a toroidal wind turbine machine provides an automatic and effective torque converter between the available wind power and the electrical generator(s). All components are designed for a minimum fatigue life of 120,000 hours which is in excess of 30 years' service life. The currently disclosed vertical axis wind turbine / wind power generator has an efficient toroidal geometry in that it comprises a "doughnut-shaped" rotational channel within which wind activated turbine blades are confined in a stable rotating motion about a vertical axis.

According to one embodiment, at least three, optionally five "aerofoil" or turbine blades travel in the "doughnut-shaped" channel. The turbine blades are aerodynamic, self-starting under low wind speeds and rotate about a central axis of a vertically mounted drive shaft. The drive shaft may be coupled through an epicyclic gearbox to transmit torque directly to an output shaft which may be connected to a device or machine, such as a pump or a high torque electrical generator. In other embodiments a hydraulic transmission converter system could be combined with an efficient low rpm, high torque electrical generator to complete a machine for directly converting wind power to electrical power. The hydraulic transmission converter is auto regulating and enables the generator to convert almost all the wind's power into electricity.

The high torque electrical generator may also be operatively associated and connected with electrical charge storage devices such as accumulators, batteries or capacitors, to store electrical power for which there is no immediate demand. The high torque electrical generator may be optionally integrated into a power grid when generator supply exceeds local demand. The vertical axis wind turbine system's efficiency comes from its increased power occasioned by the optimum differential reduction in air pressure and increased wind velocity flowing across the surface of each turbine blade. The wind pressure that develops causes the back surface of the turbine blades to move (be sucked) into the wind as a result of a negative pressure providing maximum power output.

The present invention may, of course, be carried out in other specific ways than those herein set forth without departing from the scope and the essential characteristics of the invention. The present embodiments are therefore to be construed in all aspects as illustrative and not restrictive and all changes coming within the meaning of the appended claims are intended to be embraced therein.

Advantages of the generator include its power to size ratio, low noise and lower likelihood of bird strike. It is relatively silent, vibration free, low maintenance and is low cost. It commences producing energy at very low wind speeds (2 - 3 meters/second) and has an unlimited maximum wind speed, in that it is capable of generating power in high or gale force winds when the larger horizontal axis turbines would require shutting down to avoid potential damage or destruction at dangerous and uncontrollable speeds.

The disclosed vertical axis wind turbine gives optimal and maximum positive drive regardless of wind direction or wind turbulence. Existing horizontal wind generators suffer from constant misalignment due to changes in wind direction. Those horizontal wind generators are unable to automatically self re align to the wind direction and lack the capacity for an instant response to change of wind speed. As a result, during the period of re aligning, power efficiency is reduced, and indeed often a power input to apply braking to limit damage is called for. The presently disclosed vertical axis wind turbine in comparison does not rely on or require re alignment. In part this may be explained due to its toroidal radial symmetry and turbine blade warp geometry always presenting at least part of one turbine blade in a near optimum torque orientation. This turbine blade warp geometry and turbine blade surface configuration offers the capacity to capture wind during both the downwind and upwind travel. The vertical axis wind turbine generator of the present invention operates at relatively low rpm, developing high torque with no noise or vibrations.

The high power to weight ratio allows the turbines according to the present invention to be used in high and low load applications. They are capable of installation on the roofs of buildings in urban areas, all connected to the grid, delivering power where demand is highest. This reduces the need for conventional infrastructure and particularly such hardware as overland transportation lines.

The associated electricity generator and storage facilities will can be sited remote from the actual turbine's location. For example the generating equipment can be placed in another near building, under a roof or ground, rather than underneath or proximate the turbine itself.

The turbine blades cooperate irrespective of whether they are tracking downwind or upwind during rotation. Each turbine blade acts in a similar manner to an aerofoil wing in that there is differential pressure in air-flow over the turbine blade, which experiences a "low pressure" side and a "high pressure" side with a resultant displacement towards the low pressure side. The pressure differential between the high and low pressure surfaces is created by the velocity of the wind interacting with the warped aerofoil shaped turbine blade. This differential can change along the length of each turbine blade as a result of the variation in the angle of attack of the air flow over the turbine blade along the length of the turbine blade due to the inbuilt lengthwise-warp. The observed effect is that the pressure differential drags or sucks the turbine blades into the wind delivering maximum power output This phenomenon does not occur in known wind turbines. The shape of each turbine blade causes the wind to push the wing on one side of the turbine and creates a quasi-vacuum on the other side which sucks the wings back up into the wind driving the drive shaft. As a result each turbine blade is contributing to torque in each quadrant of rotation. On the upwind side, the turbine blade orientation allows a negative/suction force to exceed upwind drag. Both sides of the turbine blades drive the wind turbine together in the same direction producing a far greater output of mechanical energy than conventional turbines.

According to one embodiment, when five turbine blades are set at 72 degree intervals, the incoming air flow pressure distributes most of the air mass against three turbine blades at any one time with the rear surface of the fourth and fifth turbine blades being dragged forward upwind. The foremost turbine blade acts as a ramp converting the received wind pressure into an upwind rotating flow resulting in drag torque. On the windward side turbine blades (offset at say 120 degrees) generate an opposite downward air flow. These turbine blades combine with a reverse vortex to complete the conversion pressure path. Kinetic energy from the wind is very efficiently captured by the vertical axis wind turbine (toroidal wind turbine) power design which generates a positive torque on both sides of the vertically disposed turbine drive shaft. Turbine power is increased by the angle at which the turbine blades receive airflow, and the tangential path of wind impacting on the turbine blades.

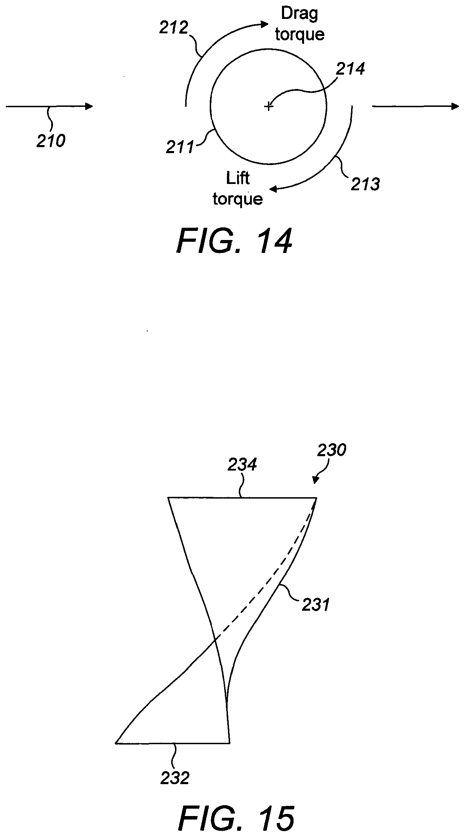

Fig. 14 illustrates the general wind flow **210** on either side of a rotating vertical axis wind turbine **211**. Wind pressure on both sides of the vertical axis contributes positively to the rotation of the turbine. The arrows **212** and **213** on opposite sides of the axis **214** rotate the turbine in the same direction. Except for the unique design of the warped/warped aerofoil wings with their compound helix shape, the lift torque arrow 213 (bottom arrow) would normally tend to be pushed by the wind in the opposite direction against the torque generated in the windward quadrants of rotation. This would normally reduce the efficiency of the turbine. However, in the presently disclosed vertical axis wind turbine, the turbine blades when in the upwind quadrants rotation contribute to the positive torque generated on the downwind side. The disclosed vertical axis wind turbine causes a simultaneous 'pull' and 'push' effect so that the side of the turbine shaft which is turning into the wind (that is against the flow of the wind, marked in the direction of arrow B) contributes positively to the rotation of the turbine. To use a sailing analogy, the toroidal wind turbine harnesses the wind's power with a combination of 'spinnaker' and 'jib' actions so that the turbine blades (sails) of both sides of the vertical axis are contributing to the same direction of rotation and in combination are able to extract far more power from the wind than any other system. Due to the turbine blade geometry and its movement during rotation about the drive shaft of the turbine, the wind power input of the turbine is now the total of the two arrows 212 and 213. For all other turbines the power output would be bottom arrow subtracted from the top arrow.

Fig. 15 shows a schematic model shape of a rigid turbine blade **230** in finite element analysis view and demonstrating a helical warp according to a preferred embodiment. Each individual turbine blade may comprise a single warped or warped aerofoil type turbine blade which may be manufactured from one mould. Turbine blade segments may be according to one embodiment, moulded from fibreglass/carbon-fibre reinforced resin composites, similar to those used in wings of modern aircraft Fibreglass/carbon-fibres resin composites provide a high strength to weight ratio. Each turbine blade may be about 2.7 metres high and 0.75 metres wide at its widest point and at that size can weigh as little as 30kgs. Turbine blade 230 has a turbine blade body **231**, a first end **232** and second end **234**. Turbine blade body 231 may be formed in the shape of a helix or with a warp but at any point along its longitudinal length it retains a generally aerofoil shape in section. Thus turbine blade 230 combines a wing cross sectional shape with an inbuilt helix which allows the turbine blade to maximise wind capture. Wind capture may be altered or improved by changing the turbine blade dimensions, shape and spacing relative to the vertical drive axis.

In each vertical axis wind turbine generator apparatus each turbine blade presents its compound pitch and warp shape to the wind as it revolves around the vertical axis drive shaft. Each turbine blade also has a circular-elliptical shape with extended planes resulting in a spatial wind trap. According to one embodiment, turbine blade 230 is manufactured from five moulded segments that together form the turbine blade 230. Each turbine blade 230 is attached to the turbine at regular 72 degree intervals which present the same, identical facade to the wind. The turbine blades 230 capture the wind and operate irrespective of wind direction to efficiently convert the wind's kinetic energy into electrical energy. In this way the disclosed vertical axis wind turbine apparatus offers a toroidal wind turbine "TWT"power system which can produce different and scalable power capacities. For example, turbines can be rated to produce 10, 15, 30 and 100 kilowatts respectively. The vertical axis wind turbine (TWT) may commence generating power at wind speeds of less than 2 meters/second ('m/s'). Most other existing wind turbine technologies require wind speeds in the order of at least 5-6 m/s simply to overcome inertia in the wind turbine system.

Non limiting examples of the turbine power and configurations are identified below. As an example, a small five turbine blade version of the wind generator could deliver from around 10 to 15 kilowatts in power. The height in this exemplary case would be approximately 2,700mm and each turbine blade would sit approximately 790mm off the ground or base support. Overall height of this illustrative embodiment would be about 3,490mm and the total weight would be less than one tonne fully assembled. A higher rated embodiment capable of producing 30kw of power would stand at 5,425mm high overall with turbine blades of 4,400mm in height and elevated about 1,025mm off the ground.

Another high rated embodiment producing 100kw of power, would stand 7,843mm in height. Its turbine blades would be 7,000mm in height and about 4,025mm off the ground. The total height of this embodiment of a vertical axis wind turbine generator may be about 11,506mm.

Further advantages of the present invention over the known art include the following. The disclosed vertical axis wind turbine or Toroidal Wind Turbine (TWT) is far more efficient than any Horizontal Wind Turbine (HWT) because it uses the volumetric surface area of each turbine blade to drive the turbine/generator instead of just the surface area of the leading edge arc of the HWT propeller blades. In the turbine blades of the present invention, on the upwind side, a negative pressure creates a force drawing the turbine blades upwind and counteracts the drag force. The TWT is lighter than the prior art HWT structures as less materials are used. Typically a horizontal wind turbine can stand 35 meters tall and weigh as much as 120 tonnes. Also light structures require less foundations. The presently disclosed vertical axis wind turbine or TWT allows for remote generating equipment separated from the turbine blade location, this provides easy accessibility for maintenance. The toroidal wind turbine has environmental advantages including reduction of bird strike as birds can see the rotating structure whereas a horizontal wind turbine can be difficult to see during rotation of turbine blades in a vertical plane. Another advantage of the presently disclosed vertical axis wind turbine is that individual vertical axis wind turbines when placed side by side do not interrupt wind flow to an adjacent vertical axis wind turbine. This allows a higher concentration of wind turbines in a given area and considering their relatively small footprint, less area is taken up for a higher power generation. On a large scale, this reduces or eliminates the need for grid infrastructure with the attendant reduction in maintenance and set up costs. Reduced weight and lower maintenance lead to lower costs per kilowatt compared to the prior art wind turbines. Furthermore the toroidal wind turbine does not generate a pressure wave downstream of wind flow as a result of which it is relatively silent. The warp in the turbine blade allows that no matter the orientation of the turbine blade relative to wind flow, it provides a positive torque.

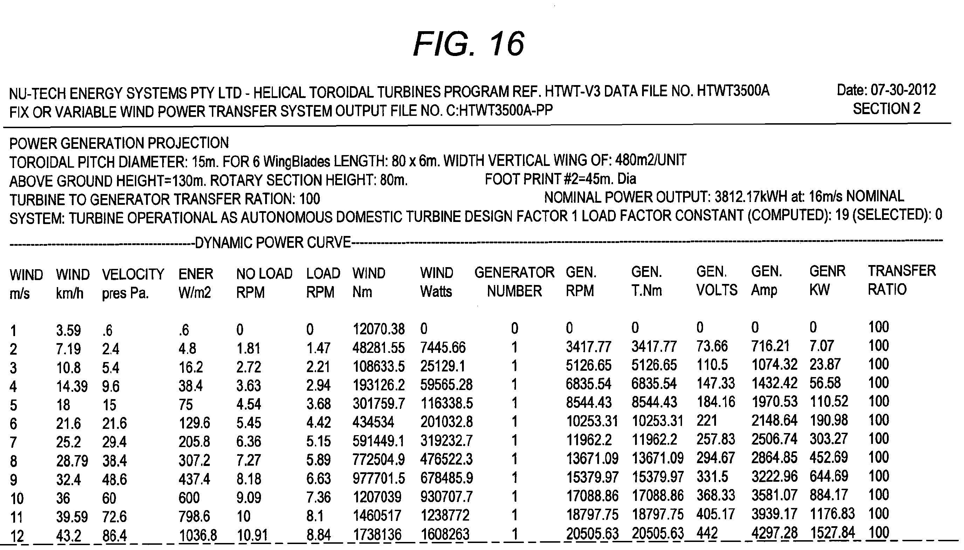

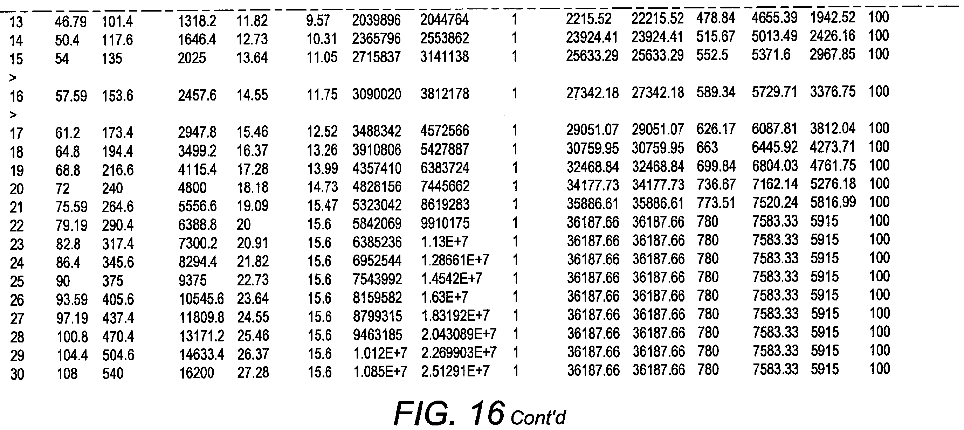

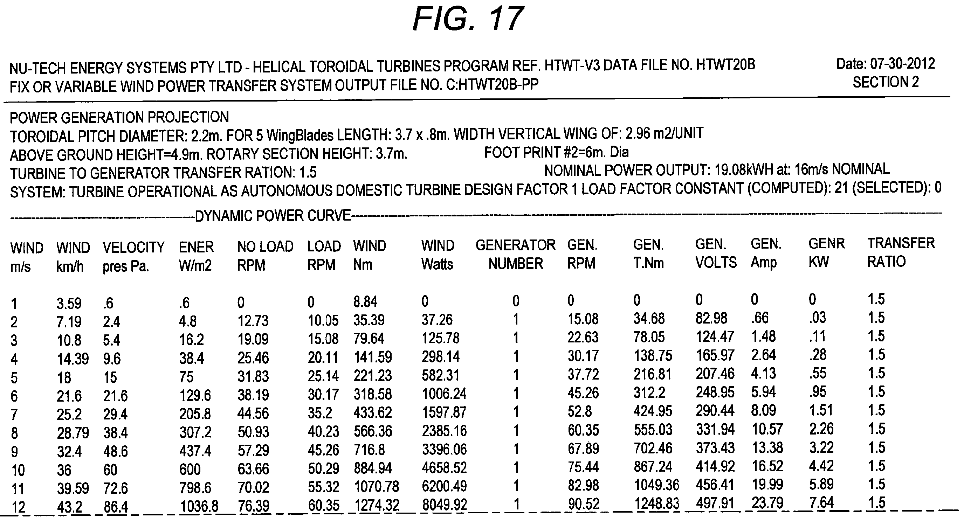

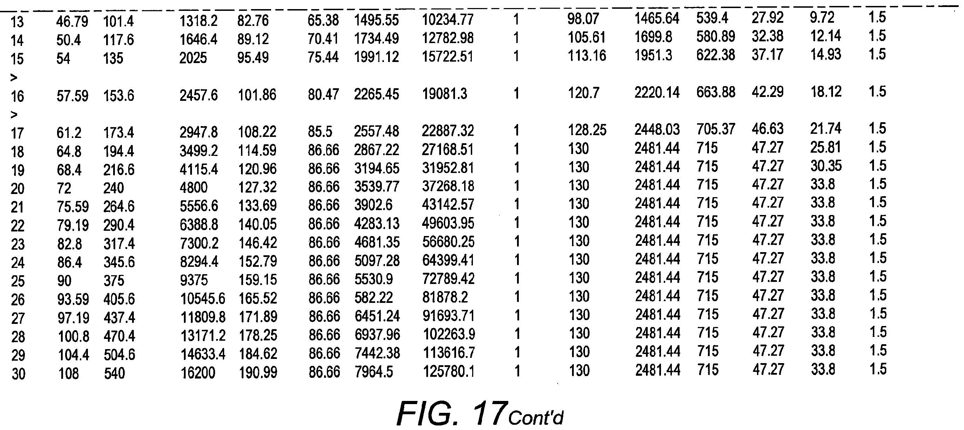

Figs. 16 and 17 show two tables of results of operation of a vertical axis wind turbine or toroidal wind turbine as disclosed herein. Each table shows different sized generators and the results for the power curve. The larger of the two in Fig. 16, (80 x 6m) show higher output than the smaller generator (3.7 x.8m) results in Fig. 17. For the same wind velocity the larger the generator the higher the output, even though for the larger generator the upwind drag is potentially higher.

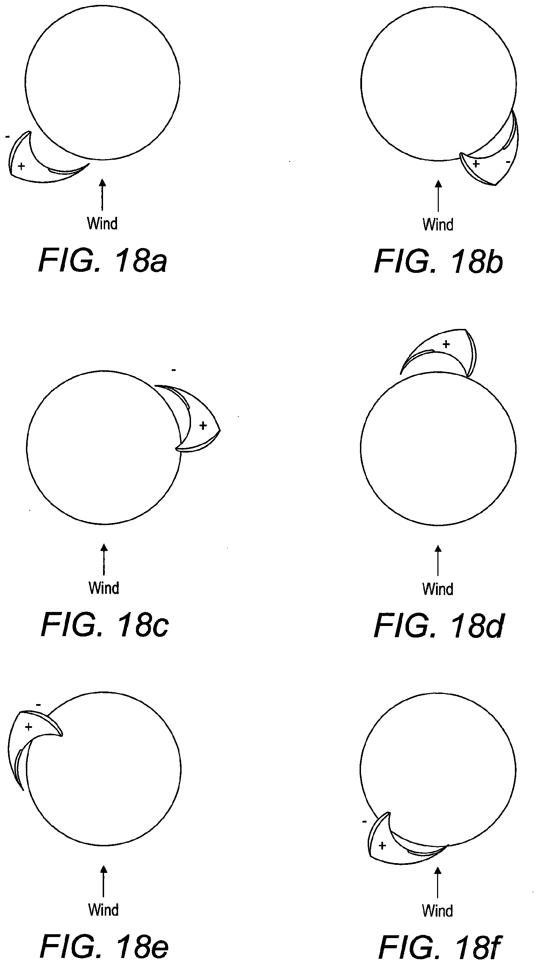

Fig. 18 shows schematically and in successive illustrations, the major windload velocity pressure area on a toroidal wind turbine machine as disclosed herein. Only one of the multiple turbine blades is illustrated, and shows a "+" or "-" to indicate pressure effect upon the turbine blade surfaces. Wind effect upon each turbine blade having a lengthwise warp continues to provide positive torque as the turbine blade advances around a toroidal path represented by the circle shown in the diagram. It will be understood that the other turbine blades act similarly but are omitted in this figure for explanation purposes only.

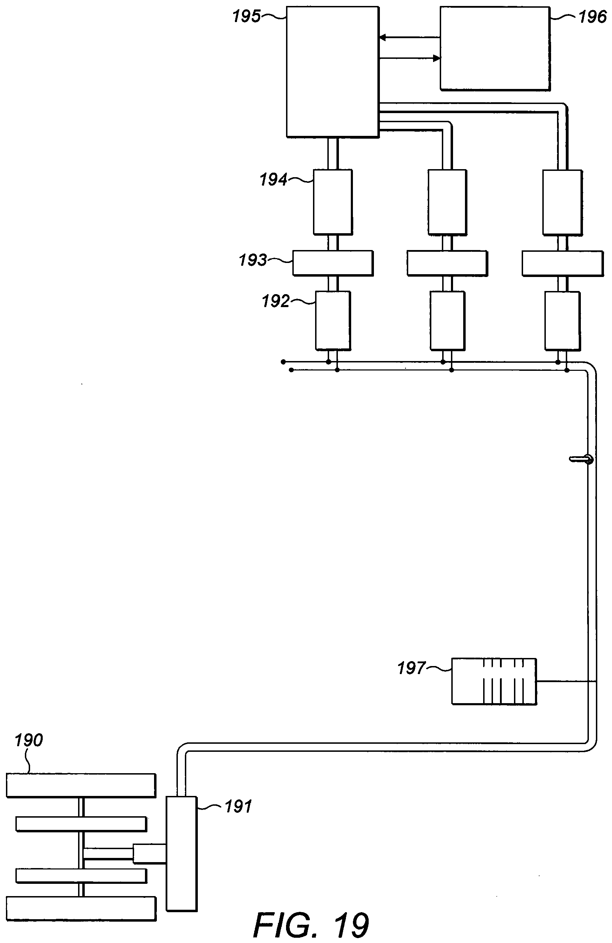

Fig. 19 represents an optional hydraulic power transmission system for transmitting torque generated by the toroidal vertical axis wind turbine **190** to a hydraulic pump **191,** connected to multiple outputs including for example variable speed hydraulic motors **192.** The hydraulic motors may be coupled to an optional gear box **193** in order to power multiphase electrical generators **194**, capable of being selectively or collectively operated according to demand. Devices **19**5 such as DC-AC inverters and AC-DC converters may be included in the system. The electrical output from the generators 194 may be stored in an electrical charge storage device such as a battery **196**, accumulator, storage cell, capacitor based charge storage device and the like. Optionally the electrical output from the generators 194 may be conducted to a local minigrid or main grid. A pressurised hydraulic reservoir or accumulator **197** is connected with the pump to deliver fluid and receive low pressure return.

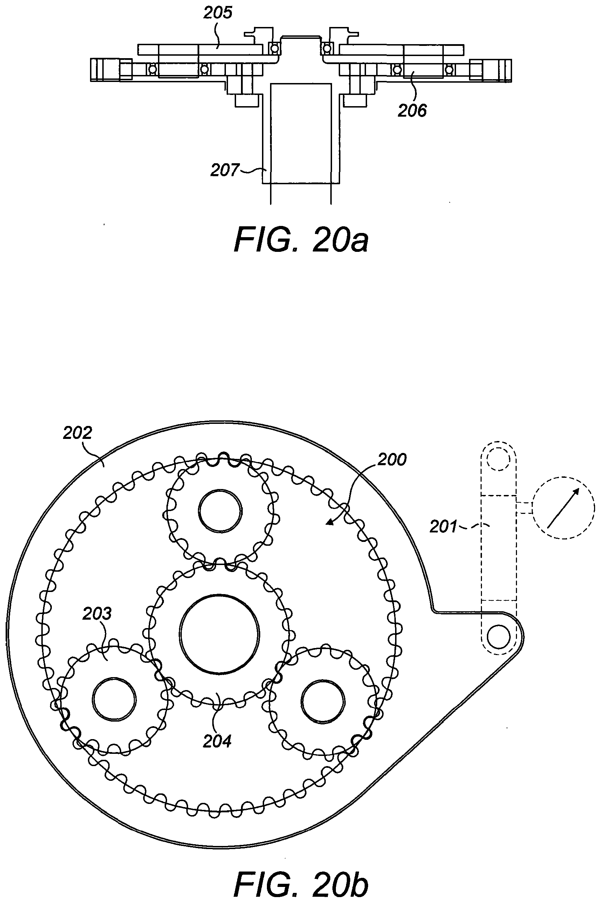

Figs. 20a and 20b illustrate an epicyclic gear transmission **200** with associated torque monitoring sensor **201**. The torque monitoring sensor 201 is mounted on a static ring gear **202**. Three epicyclic gears **203** transmit torque to a central drive gear **204**. A mounting plate **205** and bearings **206** can be provided to allow the vertically mounted shaft to be connected to the epicyclic gear transmission allowing transfer of torque from the vertically mounted shaft to an output shaft **207** for a device or a machine, such as for example, a fluid pump or an electricity generator.

It should be understood that various changes and modifications to the presently preferred embodiments described herein will be apparent to those skilled in the art. Such changes and modifications can be made without departing from the scope of the present subject matter and without diminishing its intended advantages. It is therefore intended that such changes and modifications be covered by the appended claims.

## Claims

1. Apparatus comprising:
a shaft mounted vertically in a support providing for axial rotation of the vertically mounted shaft; and
a plurality of vertically oriented elongate turbine blades (150) mounted upon the vertical shaft by radial arms (108), each turbine blade having a length between opposite free ends, and a length-wise warp which extends along at least a substantial part of the length of the turbine blade between the opposite free ends;
wherein each turbine blade (150) has a warp width between a leading edge and a trailing edge forming a turbine blade surface capable of creating a pressure differential in an air flow over the turbine blade surface;
the apparatus further comprising a plurality of linear actuators (109), each actuator arranged between a turbine blade (150) and the vertical shaft to provide controlled positioning of the turbine blades; and
**characterised in that** the apparatus further comprises a system controller adapted to selectively control individual actuators (109) to balance the turbine blades (150) as they advance about the vertical shaft; and a control flap (160) extends from the trailing edge of each turbine blade (150) to assist wind capture during rotation of the turbine blades.

2. Apparatus as claimed in claim 1, wherein the length-wise warp is such that opposite ends of each turbine blade (150) are offset within the range 30 - 180 degrees out of phase relative to a longitudinal axis through the turbine blade.

3. Apparatus as claimed in either preceding claim, wherein the length-wise warp in each turbine blade (150) is a helical warp.

4. Apparatus as claimed in any preceding claim, wherein turbine blade (150) has the shape of a warped aerofoil.

5. Apparatus as claimed in any preceding claim, wherein the turbine blade (150) has a convex surface on one side of the turbine blade.

6. Apparatus as claimed in any preceding claim, wherein the turbine blade (150) has a concave surface on one side of the turbine blade.

7. Apparatus as claimed in any preceding claim, wherein the turbine blade (150) provides a positive torque during rotation of the turbine blade about the vertically mounted shaft throughout four quadrants of rotation.

8. Apparatus as claimed in any preceding claim, wherein each radial arm (108) is moveable and each turbine blade (150) is retractably mounted upon the moveable radial arms.

9. Apparatus as claimed in claim 8, wherein the radial arms (108) are radial moment arms which transmits torque to the vertically mounted shaft.

10. Apparatus as claimed in any one of the preceding claims wherein the vertically mounted shaft is connected to an epicyclic gear transmission allowing transfer of torque from the vertically mounted shaft to a device or a machine.

11. Apparatus as claimed claim 10, wherein the device or machine is a fluid pump or an electrical generator.

12. An electrical power system comprising an apparatus as claimed in any one of claims 1 to 10, operatively connected with an electricity generator which is electrically connected with at least one of an inverter, electrical switchgear, electrical charge storage devices and a power grid.

## Patentansprüche

1. Eine Vorrichtung, die Folgendes beinhaltet:
einen Schaft, der vertikal in einem Träger montiert ist, der axiale Drehung des vertikal montierten Schafts ermöglicht; und
eine Vielzahl von vertikal ausgerichteten länglichen Turbinenblättern (150), die durch radiale Arme (108) an dem vertikalen Schaft montiert sind, wobei jedes Turbinenblatt zwischen entgegengesetzten freien Enden eine Länge und zwischen den entgegengesetzten freien Enden eine Krümmung in Längsrichtung, die sich entlang mindestens eines wesentlichen Teils der Länge des Turbinenblatts erstreckt, aufweist;
wobei jedes Turbinenblatt (150) eine Krümmungsbreite zwischen einer Vorderflanke und einer Hinterflanke aufweist, die eine Turbinenblattoberfläche bildet, die fähig ist, einen Druckunterschied in einer Luftströmung über die Turbinenblattoberfläche zu erzeugen;
wobei die Vorrichtung ferner eine Vielzahl von Linearaktoren (109) beinhaltet, wobei jeder Aktor zwischen einem Turbinenblatt (150) und dem vertikalen Schaft angeordnet ist, um die gesteuerte Positionierung der Turbinenblätter bereitzustellen; und
**dadurch gekennzeichnet, dass** die Vorrichtung ferner eine Systemsteuereinheit beinhaltet, die angepasst ist, um einzelne Aktoren (109) selektiv zu steuern, um die Turbinenblätter (150) auszuwuchten, wenn sie sich um den vertikalen Schaft fortbewegen; und sich eine Steuerklappe (160) von der Hinterflanke jedes Turbinenblatts (150) erstreckt, um Einfang von Wind während Drehung der Turbinenblätter zu unterstützen.

2. Vorrichtung gemäß Anspruch 1, wobei die Krümmung in Längsrichtung derart ist, dass entgegengesetzte Enden jedes Turbinenblatts (150) relativ zu einer Längsachse durch das Turbinenblatt innerhalb des Bereichs von 30-180 Grad phasenversetzt sind.

3. Vorrichtung gemäß einem der vorhergehenden Ansprüche, wobei die Krümmung in Längsrichtung in jedem Turbinenblatt (150) eine spiralförmige Krümmung ist.

4. Vorrichtung gemäß einem der vorhergehenden Ansprüche, wobei Turbinenblatt (150) die Form einer gekrümmten Tragfläche aufweist.

5. Vorrichtung gemäß einem der vorhergehenden Ansprüche, wobei das Turbinenblatt (150) auf einer Seite des Turbinenblatts eine konvexe Oberfläche aufweist.

6. Vorrichtung gemäß einem der vorhergehenden Ansprüche, wobei das Turbinenblatt (150) auf einer Seite des Turbinenblatts eine konkave Oberfläche aufweist.

7. Vorrichtung gemäß einem der vorhergehenden Ansprüche, wobei das Turbinenblatt (150) während Drehung des Turbinenblatts um den vertikal montierten Schaft durch vier Drehungsquadranten ein positives Drehmoment bereitstellt.

8. Vorrichtung gemäß einem der vorhergehenden Ansprüche, wobei jeder radiale Arm (108) beweglich ist und jedes Turbinenblatt (150) an den beweglichen radialen Armen einklappbar montiert ist.

9. Vorrichtung gemäß Anspruch 8, wobei die radialen Arme (108) Radialmomentarme sind, die Drehmoment an den vertikal montierten Schaft übertragen.

10. Vorrichtung gemäß einem der vorhergehenden Ansprüche, wobei der vertikal montierte Schaft mit einem epizyklischen Zahnradgetriebe verbunden ist, das die Übertragung von Drehmoment von dem vertikal montierten Schaft auf ein Gerät oder eine Maschine erlaubt.

11. Vorrichtung gemäß Anspruch 10, wobei das Gerät oder die Maschine eine Fluidpumpe oder ein elektrischer Generator ist.

12. Ein Elektrizitätsversorgungssystem, das eine Vorrichtung gemäß einem der Ansprüche 1 bis 10 beinhaltet, die operativ mit einem elektrischen Generator verbunden ist, der mit mindestens einem von einem Wechselrichter, einer elektrischen Schaltanlage, einem Speichergerät für elektrische Ladung und einem Stromnetz verbunden ist.

## Revendications

1. Appareil comprenant :
un arbre monté verticalement dans un support assurant la rotation axiale de l'arbre monté verticalement ; et
une pluralité de pales de turbine oblongues orientées verticalement (150) montées sur l'arbre vertical au moyen de bras radiaux (108), chaque pale de turbine ayant une longueur entre des extrémités libres opposées, et un gauchissement dans le sens de la longueur qui s'étend le long d'au moins une partie substantielle de la longueur de la pale de turbine entre les extrémités libres opposées ;
dans lequel chaque pale de turbine (150) a une largeur de gauchissement entre un bord d'attaque et un bord de fuite formant une surface de pale de turbine capable de créer une pression différentielle dans un flux d'air par-dessus la surface de pale de turbine ;
l'appareil comprenant en outre une pluralité d'actionneurs linéaires (109), chaque actionneur étant disposé entre une pale de turbine (150) et l'arbre vertical afin d'apporter un positionnement commandé des pales de turbine ; et
**caractérisé en ce que** l'appareil comprend en outre un organe de commande de système conçu pour commander sélectivement des actionneurs individuels (109) afin d'équilibrer les pales de turbine (150) tandis qu'elles progressent autour de l'arbre vertical ; et qu'un volet de commande (160) s'étend à partir du bord de fuite de chaque pale de turbine (150) afin d'aider à la capture du vent durant la rotation des pales de turbine.

2. Appareil tel que revendiqué dans la revendication 1, dans lequel le gauchissement dans le sens de la longueur est tel que des extrémités opposées de chaque pale de turbine (150) sont décalées au sein de l'intervalle 3 - 180 degrés de façon déphasée relativement à un axe longitudinal à travers la pale de turbine.

3. Appareil tel que revendiqué dans l'une ou l'autre revendication précédente, dans lequel le gauchissement dans le sens de la longueur dans chaque pale de turbine (150) est un gauchissement hélicoïdal.

4. Appareil tel que revendiqué dans n'importe quelle revendication précédente, dans lequel la pale de turbine (150) a la forme d'un profil de voilure gauchi.

5. Appareil tel que revendiqué dans n'importe quelle revendication précédente, dans lequel la pale de turbine (150) a une surface convexe sur un côté de la pale de turbine.

6. Appareil tel que revendiqué dans n'importe quelle revendication précédente, dans lequel la pale de turbine (150) a une surface concave sur un côté de la pale de turbine.

7. Appareil tel que revendiqué dans n'importe quelle revendication précédente, dans lequel la pale de turbine (150) apporte un couple positif durant la rotation de la pale de turbine autour de l'arbre monté verticalement sur quatre quadrants de rotation.

8. Appareil tel que revendiqué dans n'importe quelle revendication précédente, dans lequel chaque bras radial (108) est déplaçable et chaque pale de turbine (150) est montée de façon rétractable sur les bras radiaux déplaçables.

9. Appareil tel que revendiqué dans la revendication 8, dans lequel les bras radiaux (108) sont des bras radiaux de moment qui transmettent un couple à l'arbre monté verticalement.

10. Appareil tel que revendiqué dans l'une quelconque des revendications précédentes dans lequel l'arbre monté verticalement est raccordé à une transmission par engrenages planétaires permettant un transfert de couple de l'arbre monté verticalement à un dispositif ou à une machine.

11. Appareil tel que revendiqué dans la revendication 10, dans lequel le dispositif ou la machine est une pompe à fluide ou un générateur électrique.

12. Un système d'alimentation électrique comprenant un appareil tel que revendiqué dans l'une quelconque des revendications 1 à 10, fonctionnellement raccordé à un générateur d'électricité qui est raccordé électriquement à au moins un élément parmi un convertisseur, un appareil de commutation électrique, des dispositifs de stockage de charge électrique et un réseau électrique.
